# EUROPÄISCHE PATENTSCHRIFT

(11) **EP 4 367 346 B1**
(45) Veröffentlichungstag und Bekanntmachung des Hinweises auf die Patenterteilung: **26.08.2026**
(21) Anmeldenummer: 22738465.8
(22) Anmeldetag: 29.06.2022
(51) Int. Cl.: E04G 21/04, B25J 9/16

(54) **VERFAHREN UND SYSTEM ZUM STEUERN EINER BEWEGUNG EINES VERSTELLBAREN VERTEILERMASTS UND VERFAHREN ZUM VERTEILEN VON BAU- UND/ODER DICKSTOFF MITTELS EINER BAU- UND/ODER DICKSTOFFPUMPENVORRICHTUNG AUFWEISEND EINEN VERSTELLBAREN VERTEILERMAST**
METHOD AND SYSTEM FOR CONTROLLING A MOVEMENT OF AN ADJUSTABLE DISTRIBUTOR BOOM, AND METHOD FOR DISTRIBUTING CONSTRUCTION MATERIAL AND/OR THICK MATTER BY MEANS OF A CONSTRUCTION MATERIAL AND/OR THICK MATTER PUMPING DEVICE HAVING AN ADJUSTABLE DISTRIBUTOR BOOM
PROCÉDÉ ET SYSTÈME DE COMMANDE D'UN MOUVEMENT D'UNE FLÈCHE DE DISTRIBUTEUR RÉGLABLE, ET PROCÉDÉ DE DISTRIBUTION DE MATÉRIAU DE CONSTRUCTION ET/OU DE MATIÈRE ÉPAISSE AU MOYEN D'UN MATÉRIAU DE CONSTRUCTION ET/OU D'UN DISPOSITIF DE POMPAGE DE MATIÈRE ÉPAISSE AYANT UNE FLÈCHE DE DISTRIBUTEUR RÉGLABLE

(30) Priorität: 06.07.2021 DE 102021207097
(43) Veröffentlichungstag der Anmeldung: 15.05.2024
(73) Patentinhaber: Putzmeister Engineering GmbH, 72631 Aichtal (DE)
(72) Erfinder: STEINWANDEL, Alexander, 72770 Reutlingen (DE)
(74) Vertreter: Patentanwälte Ruff, Wilhelm, Beier, Dauster & Partner mbB
(86) Internationale Anmeldenummer: PCT/EP2022/067906
(87) Internationale Veröffentlichungsnummer: WO 2023/280656

(56) Entgegenhaltungen:
- EP-A1- 3 705 663
- DE-A1- 102016 125 145
- WILDAN LALO: "Ein Beitrag zur Entwicklung von Assistenzsystemen fu?r serielle und parallele Roboter am Beispiel von Autobetonpumpen und seilbasierten Regalbediengera?ten", 1 January 2014 (2014-01-01), XP055383260, Retrieved from the Internet <URL:https://duepublico.uni-duisburg-essen.de/servlets/DerivateServlet/Derivate-35035/Lalo_Diss.pdf> [retrieved on 20170620]

## Beschreibung

### ANWENDUNGSGEBIET UND STAND DER TECHNIK

Die Erfindung bezieht sich auf ein Verfahren und ein System, insbesondere jeweils, zum Steuern einer Bewegung eines verstellbaren Verteilermasts und ein Verfahren zum Verteilen von Bau- und/oder Dickstoff mittels einer Bau- und/oder Dickstoffpumpenvorrichtung aufweisend einen verstellbaren Verteilermast aufweisend ein solches Verfahren zum Steuern einer Bewegung eines verstellbaren Verteilermasts.

Die DE 10 2016 125 145 A1 offenbart einen Großmanipulator, insbesondere eine Autobetonpumpe, mit einem um eine vertikale Achse mittels eines Drehantriebs drehbaren Mastbock, der auf einem Gestell angeordnet ist, einem Knickmast, der zwei oder mehr Mastarme umfasst, wobei die Mastarme über Knickgelenke mit dem jeweils benachbarten Mastbock oder Mastarm mittels je eines Schwenkantriebs schwenkbeweglich verbunden sind, mit einer die Antriebe ansteuernden Steuereinrichtung für die Mastbewegung, wobei die Steuereinrichtung dazu eingerichtet ist, den Knickmast mit einer Steuerungsabfolge für die Ansteuerung der Antriebe aus einer Ausgangsposition des Knickmastes autonom in eine vorgegebene Zielposition des Knickmastes zu überführen. Außerdem offenbart die DE 10 2016 125 145 A1 ein Verfahren zur Steuerung der Bewegung eines Knickmastes eines Großmanipulators, insbesondere einer Autobetonpumpe.

Die EP 3 705 663 A1 offenbart eine Gelenkarm-Steuerung für den Gelenkarm einer Betonpumpe, wobei der Gelenkarm einen um eine vertikale Achse drehbaren Drehbock und mindestens zwei mittels Gelenken um horizontale Achsen verschwenkbare Segmente aufweist, wobei der Drehbock über einen Aktuator um die vertikale Achse verfahrbar ist und die Segmente über Aktuatoren um die horizontalen Achsen verschwenkbar sind, wobei bevorzugt Sensoren zur Bestimmung des Drehwinkels des Drehbocks und zur Bestimmung der Gelenkwinkel der Gelenke vorgesehen sind, wobei die Gelenkarm-Steuerung zur Ansteuerung der Aktuatoren dient und eine Geometriesteuerung umfasst, welche aus Eingabewerten zu einer Soll-TCP-Bewegung eine Trajektorie mit Soll-Werten für die Bewegung des Drehbocks und/oder der Gelenke erzeugt. Dabei ist vorgesehen, dass die Geometriesteuerung die Trajektorie durch Lösung eines Optimierungsproblems bestimmt, wobei das Optimierungsproblem als Zielfunktion eine Abweichung zwischen der Soll-TCP-Bewegung und einer sich durch die Trajektorie in einem physikalischen Modell des Gelenkarms ergebenden TCP-Bewegung minimiert, wobei Beschränkungen der Hydraulik und/oder des Arbeitsraumes als Nebenbedingung in die Optimierung eingehen.

### AUFGABE UND LÖSUNG

Der Erfindung liegt als Aufgabe die Bereitstellung eines Verfahrens und eines Systems, jeweils zum Steuern einer Bewegung eines verstellbaren Verteilermasts, das jeweils verbesserte Eigenschaften aufweist, und eines Verfahrens zum Verteilen von Bau- und/oder Dickstoff mittels einer Bau- und/oder Dickstoffpumpenvorrichtung aufweisend einen verstellbaren Verteilermast aufweisend ein solches Verfahren zum Steuern einer Bewegung eines verstellbaren Verteilermasts zugrunde.

Die Erfindung löst diese Aufgabe durch die Bereitstellung eines Verfahrens mit den Merkmalen des Anspruchs 1, eines Verfahrens mit den Merkmalen des Anspruchs 8 und eines Systems mit den Merkmalen des Anspruchs 9. Vorteilhafte Weiterbildungen und/oder Ausgestaltungen der Erfindung sind in den abhängigen Ansprüchen beschrieben.

Das erfindungsgemäße, insbesondere automatische, Verfahren ist zum, insbesondere automatischen, Steuern einer Bewegung bzw. einer Fahrt bzw. einer Verstellung eines, insbesondere flexibel, verstellbaren Verteilermasts ausgebildet bzw. konfiguriert bzw. vorgesehen. Der Verteilermast umfasst bzw. weist mehrere, insbesondere flexibel, verstellbare Mastkomponenten auf. Mindestens eine selbe Spitzenposition, insbesondere ein selber Wert der Spitzenposition, einer Mastspitze des Verteilermasts ist durch verschiedene Stellungs-Kombinationen bzw. -Konfigurationen, insbesondere verschiedene Werte der Stellungs-Kombination, der Mastkomponenten erreichbar. Das Verfahren umfasst bzw. weist die Schritte auf: a) Ermitteln, insbesondere automatisches Ermitteln und/oder Erfassen und/oder Berechnen, von, insbesondere jeweiligen und/oder mehreren, vektoriellen Abstandsgrößen, insbesondere Werten der Abstandsgrößen und/oder, insbesondere geometrischen, Abstandsvektoren, für mehrere Mastelemente, insbesondere von den mehreren Mastelementen, des Verteilermasts in Bezug auf mindestens ein, insbesondere jedes und/oder jeweiliges, insbesondere nächstes, Hindernis, insbesondere zu mindestens dem Hindernis, für die Mastelemente. b) Ermitteln, insbesondere automatisches Ermitteln und/oder Berechnen, von, insbesondere jeweiligen, vektoriellen Ausweichbewegungsgrößen, insbesondere Werten der Ausweichbewegungsgrößen und/oder, insbesondere geometrischen, Ausweichbewegungsvektoren, für mehrere, insbesondere alle, der Mastkomponenten basierend auf den ermittelten Abstandsgrößen. c) Steuern, insbesondere automatisches Steuern, der Bewegung in Abhängigkeit von den ermittelten Ausweichbewegungsgrößen und einer vektoriellen Bedienerbewegungsgröße, insbesondere mindestens eines Werts der Bedienerbewegungsgröße und/oder eines, insbesondere geometrischen, Bedienerbewegungsvektors, bestimmend eine Spitzenposition, insbesondere einen Wert der Spitzenposition, insbesondere der Mastspitze.

Dies ermöglicht ein, insbesondere aktives, Ausweichen des Verteilermasts mindestens dem Hindernis bei bzw., insbesondere gleichzeitig, mit der Bewegung bzw. einem Fahren des Verteilermasts, insbesondere zu einer Erreichung der, insbesondere bestimmten, Spitzenposition. Somit ermöglicht dies eine Vermeidung einer Sperrung bzw. eines Anhaltens der, insbesondere weiteren, Bewegung des Verteilermasts, insbesondere zu einer Vermeidung einer, insbesondere bevorstehenden bzw. drohenden, Berührung bzw. Kollision des Verteilermasts mit mindestens dem Hindernis. Somit ermöglicht dies die Erreichung der, insbesondere bestimmten, Spitzenposition.

Insbesondere ermöglicht dies somit eine Sicherheit, insbesondere des überwachten Betriebs, ohne unnötige Arbeitsunterbrechungen. Somit ermöglicht dies eine Steigerung einer Akzeptanz eines, insbesondere des, überwachten Betriebs und somit seine Einsatzhäufigkeit. Somit ermöglicht dies eine Erhöhung der Sicherheit bei der Bewegung bzw. einem Betrieb des Verteilermasts. Zusätzlich oder alternativ ermöglicht dies, insbesondere das Ausweichen, den flüssigen Betrieb des Verteilermasts, insbesondere in einem Einhandbetrieb in einem beengten Arbeitsumfeld. Somit ermöglicht dies eine deutliche Vereinfachung einer Bedienung des Verteilermasts, insbesondere für unerfahrene Bediener bzw. Benutzer, und somit einerseits eine Steigerung einer Produktivität und andererseits die Erhöhung der Sicherheit durch eine Fokussierung einer Aufmerksamkeit auf die Mastspitze.

Insbesondere kann der Begriff "selbstständig" synonym für den Begriff "automatisch" verwendet werden.

Der Verteilermast kann ein Bau- und/oder Dickstoffverteilermast sein. Zusätzlich oder alternativ kann der Verteilermast einer Bau- und/oder Dickstoffpumpenvorrichtung sein. Insbesondere kann die Bau- und/oder Dickstoffpumpenvorrichtung mobil, insbesondere fahrbar, insbesondere eine Auto-Bau- und/oder Dickstoffpumpe, sein. Weiter zusätzlich oder alternativ kann die Bau- und/oder Dickstoffpumpenvorrichtung zur Förderung von Bau- und/oder Dickstoff ausgebildet sein. Weiter zusätzlich oder alternativ kann Baustoff Mörtel, Zement, Estrich, Beton und/oder Putz bezeichnen. Weiter zusätzlich oder alternativ kann Dickstoff Schlamm bezeichnen.

Mindestens dieselbe Spitzenposition der Mastspitze kann durch mindestens drei, insbesondere mindestens zehn, verschiedene Stellungs-Kombinationen der Mastkomponenten erreichbar sein.

Mehrere, insbesondere mindestens drei, insbesondere mindestens zehn, Spitzenpositionen der Mastspitze können, insbesondere zu verschiedenen Zeitpunkten, durch, insbesondere jeweils, verschiedene Stellungs-Kombinationen der Mastkomponenten erreichbar sein.

Die Mastspitze kann ein freies Ende des Verteilermasts sein.

Der Verteilermast kann, insbesondere als eines der mehreren Mastelemente, einen, insbesondere frei hängenden, Endschlauch aufweisen.

Die Mastelemente können die Mastkomponenten aufweisen, und/oder die Mastkomponenten können die Mastelemente aufweisen, insbesondere sein.

Der Begriff "Bewegungsgrenze" oder der Begriff "Störkontur" oder der Begriff "Hindernislandschaft "kann synonym für den Begriff "Hindernis" verwendet werden.

Das Hindernis kann dynamisch und/oder ein anderer Verteilermast sein.

Die Abstandsgrößen können, insbesondere momentane bzw. aktuelle, Ist-Abstandsgrößen und/oder für die mehreren Mastelemente des Verteilermasts in einer, insbesondere momentanen bzw. aktuellen, Ist-Maststellung bzw. -pose sein. Insbesondere kann die Ist-Maststellung, insbesondere durch die, insbesondere veränderbare, Stellungs-Kombination, veränderbar sein. Zusätzlich oder alternativ können die Abstandsgrößen, insbesondere momentane bzw. aktuelle, Richtungen, insbesondere Ist-Richtungen, und/oder, insbesondere momentane bzw. aktuelle, Beträge, insbesondere Ist-Beträge, von Abständen der Mastelemente in Bezug auf mindestens das Hindernis sein.

Die Ausweichbewegungsgrößen können, insbesondere momentane bzw. aktuelle, Soll-Ausweichbewegungsgrößen sein. Zusätzlich oder alternativ können die Ausweichbewegungsgrößen, insbesondere momentane bzw. aktuelle, Richtungen, insbesondere Soll-Richtungen, und/oder, insbesondere momentane bzw. aktuelle, Geschwindigkeiten, insbesondere Soll-Geschwindigkeiten, von, insbesondere jeweiligen und/oder mehreren, Ausweichbewegungen, insbesondere Soll-Ausweichbewegungen, der mehreren Mastkomponenten sein.

Die Bedienerbewegungsgröße bestimmend die Spitzenposition kann eine, insbesondere momentane bzw. aktuelle, Soll-Bedienerbewegungsgröße und/oder bestimmend eine, insbesondere momentane bzw. aktuelle, Soll-Spitzenposition, insbesondere der Mastspitze, sein. Zusätzlich ist die Bedienerbewegungsgröße eine momentane bzw. aktuelle Soll-Richtung und eine momentane bzw. aktuelle Soll-Geschwindigkeit einer Soll-Bewegung der Mastspitze. Weiter zusätzlich kann die Bedienerbewegungsgröße ein, insbesondere momentaner bzw. aktueller, Fahrbefehl bzw. Fahrkommando, insbesondere zu der Erreichung der Spitzenposition, sein. Weiter zusätzlich oder alternativ kann die Bedienerbewegungsgröße, insbesondere durch den Bediener bzw. Benutzer, insbesondere des Verteilermasts und/oder der Bau- und/oder Dickstoffpumpenvorrichtung, insbesondere momentan bzw. aktuell, vorgegeben sein. Weiter zusätzlich oder alternativ kann das Verfahren den Schritt aufweisen: Ermitteln, insbesondere Erfassen, einer, insbesondere momentanen bzw. aktuellen, Vorgabe der Bedienerbewegungsgröße, insbesondere durch den Bediener.

Falls die Bedienerbewegungsgröße nicht vorgegeben bzw. nicht vorhanden und/oder gleich null ist, braucht oder kann nicht der Schritt c) ausgeführt bzw. keine Bewegung des Verteilermasts gesteuert werden.

Der Schritt c) kann aufweisen: Steuern der Bewegung mittels Verknüpfens bzw. Kombinierens bzw. Überlagerns der Ausweichbewegungsgrößen und der Bedienerbewegungsgröße miteinander, insbesondere mittels eines kinematischen Zusammenhangs.

Der Schritt b) kann zeitlich nach dem Schritt a) ausgeführt werden. Zusätzlich oder alternativ kann der Schritt c) zeitlich nach dem Schritt b) ausgeführt werden. Weiter zusätzlich oder alternativ kann das Verfahren, insbesondere können die Schritte a), b) und c), insbesondere mehrfach, erneut, insbesondere ausgeführt, werden.

Der Schritt c) weist auf: Steuern der Bewegung mittels, insbesondere automatischen, Gewichtens der Ausweichbewegungsgrößen, insbesondere mittels, insbesondere jeweiliger veränderbarer, Gewichtungsfaktoren, insbesondere Werten der Gewichtungsfaktoren, abhängig von bzw. basierend auf, insbesondere jeweiligen, Beträgen der Abstandsgrößen, und der Bedienerbewegungsgröße. Dies ermöglicht einen Vorrang bzw. eine Priorisierung eines dringlichen Ausweichens einer der Mastkomponenten, insbesondere zu der Vermeidung der Berührung, relativ zu einem weniger oder nicht dringlichen Ausweichen bzw. Bewegen einer anderen der Mastkomponenten. Insbesondere können die Gewichtungsfaktoren abhängig von den Beträgen der Abstandsgrößen reziprok sein. Zusätzlich oder alternativ kann ein Gewichtungsfaktor der Bedienerbewegungsgröße, insbesondere zeitlich dauerhaft, fest bzw. konstant sein. Weiter zusätzlich oder alternativ kann dies, insbesondere das Gewichten, dazu führen, dass die Ausweichbewegungsgrößen und die Bedienerbewegungsgröße nicht miteinander vereinbar sein können, insbesondere die Ausweichbewegungsgrößen die Bedienerbewegungsgröße überwiegen. Somit kann dies dazu führen, dass keine Bewegung des Verteilermasts gesteuert werden braucht oder kann.

Das Verfahren umfasst bzw. weist den Schritt auf: Modellieren, insbesondere automatisches Modellieren, des Hindernisses, insbesondere eines Rests einer, insbesondere der, Bau- und/oder Dickstoffpumpenvorrichtung aufweisend den Verteilermast, mit einer Form größer als eine reale bzw. tatsächliche Form des Hindernisses, insbesondere mittels, insbesondere automatischen, Glättens und/oder Abflachens von Übergängen der realen Form. Der Schritt a) weist auf: Ermitteln mindestens einer, insbesondere alle, der Abstandsgrößen, insbesondere mindestens für die Mastspitze, in Bezug auf das modellierte Hindernis. Dies ermöglicht eine Vermeidung einer Nicht-Vereinbarkeit der Ausweichbewegungsgrößen und der Bedienerbewegungsgröße miteinander. Insbesondere weist das Modellieren ein Einführen von Flanken und/oder Rampen auf. Zusätzlich können/kann das Glätten und/oder das Abflachen von den Übergängen ein Abrunden von Kanten und/oder Ecken aufweisen, insbesondere sein.

In einer Weiterbildung der Erfindung sind die Mastkomponenten gleichartig, insbesondere Enden von Mastsegmenten bzw. -abschnitten des Verteilermasts, insbesondere die Mastspitze und, insbesondere flexibel, verstellbare Mastgelenke, insbesondere Zwischen-Mastgelenke, des Verteilermasts. Insbesondere kann mindestens eines der Mastgelenke ein Knick-, Dreh- und/oder Schubgelenk aufweisen, insbesondere sein. Insbesondere kann ein letztes Mastgelenk um eine Vertikalachse drehbar sein. Zusätzlich oder alternativ kann die Bau- und/oder Dickstoffpumpenvorrichtung, insbesondere der Verteilermast, mehrere Gelenkantriebe zur Bewegung bzw. Verstellung der Mastgelenke aufweisen.

In einer Weiterbildung der Erfindung zeigen bzw. führen die vektoriellen Ausweichbewegungsgrößen von dem, insbesondere jeweiligen, Hindernis weg. Insbesondere sind die vektoriellen Ausweichbewegungsgrößen den, insbesondere jeweiligen, vektoriellen Abstandsgrößen entgegengesetzt. Dies ermöglicht eine Bewegung bzw. eine Verstellung mindestens einer der Mastkomponenten von dem Hindernis weg und/oder, insbesondere somit, eine Vergrößerung mindestens einer der Abstandsgrößen.

In einer Weiterbildung, insbesondere einer Ausgestaltung, der Erfindung umfasst bzw. weist das Verfahren, insbesondere den Schritt, auf: Speichern, insbesondere automatisches Speichern, der gesteuerten bzw. ausgeführten Bewegung des Verteilermasts. Das Verfahren umfasst bzw. weist den Schritt auf: falls die Ausweichbewegungsgrößen und die Bedienerbewegungsgröße nicht miteinander vereinbar sind, insbesondere die Ausweichbewegungsgrößen die Bedienerbewegungsgröße überwiegen, rückwärtslaufendes bzw., insbesondere zeitlich, umgekehrtes Ausführen, insbesondere automatisches Ausführen, der gespeicherten Bewegung. Dies ermöglicht einen Ausweg aus dieser Situation und/oder, insbesondere somit, die Erreichung der, insbesondere bestimmten, Spitzenposition, insbesondere auf einem anderen Weg.

In einer Weiterbildung der Erfindung umfasst bzw. weist der Verteilermast mehrere, insbesondere flexibel, verstellbare, insbesondere die mehreren verstellbaren, Mastgelenke auf. Insbesondere mindestens, dieselbe Spitzenposition ist durch verschiedene Gelenkstellungs-Kombinationen der Mastgelenke erreichbar. Insbesondere haben bzw. weisen die Mastgelenke verschiedene Verstellbereiche, insbesondere verschiedene Werte der Verstellbereiche, auf. Der Schritt c) weist auf: Steuern von Bewegungen der Mastgelenke in Abhängigkeit von den Ausweichbewegungsgrößen und der Bedienerbewegungsgröße, insbesondere und unter Berücksichtigung der Verstellbereiche. Insbesondere kann mindestens eines der Mastgelenke ein Knick-, Dreh- und/oder Schubgelenk aufweisen, insbesondere sein. Insbesondere kann ein letztes Mastgelenk um eine Vertikalachse drehbar sein. Zusätzlich oder alternativ kann mindestens einer der Verstellbereiche einen Winkelbereich aufweisen, insbesondere sein. Weiter zusätzlich oder alternativ kann mindestens einer der Verstellbereiche durch mindestens einen, insbesondere mechanischen, Anschlag mindestens eines der Mastgelenke definiert, insbesondere begrenzt, sein. Weiter zusätzlich oder alternativ kann die Bau- und/oder Dickstoffpumpenvorrichtung, insbesondere der Verteilermast, mehrere Gelenkantriebe zur Bewegung bzw. Verstellung der Mastgelenke bzw. zur Veränderung bzw. Einstellung der, insbesondere veränderbaren, Gelenkstellungs-Kombination aufweisen. Weiter zusätzlich oder alternativ kann eines der Mastgelenke an einem nicht-freien bzw. festen Ende bzw. einem Mastfuß des Verteilermasts sein. Weiter zusätzlich oder alternativ kann der Verteilermast mittels der Mastgelenke Roll- und/oder Z-faltbar, insbesondere Roll-Z-faltbar, sein.

In einer Weiterbildung, insbesondere einer Ausgestaltung, der Erfindung weist der Schritt c) auf: Steuern der Bewegung mittels, insbesondere gewichteter und/oder modularer, inverser Kinematik. Dabei sind die Ausweichbewegungsgrößen und die Bedienerbewegungsgröße Eingangsgrößen. Dies ermöglicht das Ausweichen des Verteilermasts mindestens dem Hindernis, insbesondere gleichzeitig, mit der Bewegung bzw. einem Fahren des Verteilermasts, insbesondere zu der Erreichung der, insbesondere bestimmten, Spitzenposition. In anderen Worten: Dies ermöglicht die gleichzeitige Umsetzung des, insbesondere kommandierten, Fahrbefehls und die Vermeidung der Berührung. Nochmals in anderen Worten: Dies ermöglicht eine Einbettung der Vermeidung der Berührung bzw. der Kollisionsvermeidung in eine Umsetzung des Fahrbefehls, insbesondere durch den Bediener. Insbesondere kann die Mastspitze als Endeffektor (Englisch: Tool Center Point, Abkürzung: TCP) bezeichnet werden. Zusätzlich oder alternativ kann der Begriff "Inverskinematik" oder der Begriff "Rückwärtstransformation" synonym für den Begriff "inverse Kinematik" verwendet werden. Weiter zusätzlich oder alternativ kann die inverse Kinematik die Verstellbereiche berücksichtigen, insbesondere aufweisen. Weiter zusätzlich oder alternativ können Geschwindigkeiten, insbesondere Drehgeschwindigkeiten bzw. Gelenkgeschwindigkeiten, der Mastkomponenten, insbesondere der Mastgelenke, Ausgangsgrößen sein. Weiter zusätzlich oder alternativ können die Ausgangsgrößen, insbesondere automatisch, ermittelt, insbesondere gesucht und/oder berechnet, werden.

Insbesondere kann das Hindernis, insbesondere mindestens ein Wert des Hindernisses, vorgegeben, insbesondere erfasst bzw. gemessen, werden oder sein, insbesondere durch den Bediener und/oder ein Bauprogramm. Zusätzlich oder alternativ kann der Schritt a) aufweisen: Ermitteln, insbesondere Berechnen, der Abstandsgrößen basierend auf dem vorgegebenen, insbesondere erfassten, Hindernis und der Ist-Maststellung des Verteilermasts. Insbesondere kann die Ist-Maststellung mittels direkter Kinematik, insbesondere automatisch, ermittelt, insbesondere berechnet, werden oder sein, insbesondere wobei eine, insbesondere momentane bzw. aktuelle, Ist-Stellungs-Kombination, insbesondere mindestens ein Wert der Ist-Stellungs-Kombination, der Mastkomponenten eine Eingangsgröße sein kann. Insbesondere können Gelenkwinkel der Mastgelenke Eingangsgrößen sein.

In einer Weiterbildung der Erfindung weist der Schritt a) auf: Berührungsloses Erfassen bzw. Messen, insbesondere automatisches Erfassen, des Hindernisses und/oder der Abstandsgrößen, insbesondere während bzw. bei bzw., insbesondere gleichzeitig, mit der Bewegung. Dies ermöglicht die Vermeidung der Berührung. Insbesondere kann das Erfassen mittels Kamera und/oder Lidar (Abkürzung für Englisch: light detection and ranging), insbesondere Ladar (Abkürzung für Englisch: laser detection and ranging), sein.

Das erfindungsgemäße, insbesondere automatische, Verfahren ist zum, insbesondere automatischen, Verteilen von Bau- und/oder Dickstoff mittels einer, insbesondere der, Bau- und/oder Dickstoffpumpenvorrichtung ausgebildet bzw. konfiguriert bzw. vorgesehen. Die Bau- und/oder Dickstoffpumpenvorrichtung weist einen, insbesondere den, verstellbaren Verteilermast auf. Der Verteilermast umfasst bzw. weist eine, insbesondere flexibel verstellbare, Förderleitung zur Förderung bzw. zum Fördern von Bau- und/oder Dickstoff auf. Das Verfahren umfasst bzw. weist ein, insbesondere das, Verfahren zum Steuern einer, insbesondere der, Bewegung des Verteilermasts wie vorhergehend genannt bzw. beschrieben auf. Das Verfahren umfasst bzw. weist den Schritt auf: Fördern, insbesondere automatisches Fördern, von Bau- und/oder Dickstoff während bzw. bei bzw., insbesondere gleichzeitig, mit der Bewegung bzw. des Schritts c), insbesondere mittels der bzw. durch die Förderleitung. Dies, insbesondere das Fördern während der Bewegung, ermöglicht das Verteilen. Insbesondere kann die Förderleitung eine Rohrleitung aufweisen, insbesondere sein. Zusätzlich oder alternativ kann die Förderleitung den Endschlauch aufweisen.

Das erfindungsgemäße System ist zum, insbesondere zu dem, Steuern einer, insbesondere der, Bewegung eines, insbesondere des, verstellbaren Verteilermasts ausgebildet bzw. konfiguriert. Der Verteilermast weist mehrere verstellbare, insbesondere die mehreren verstellbaren, Mastkomponenten auf. Mindestens eine selbe, insbesondere dieselbe, Spitzenposition einer, insbesondere der, Mastspitze des Verteilermasts ist durch verschiedene, insbesondere die verschiedenen, Stellungs-Kombinationen der Mastkomponenten erreichbar. Das System umfasst bzw. weist eine Ermittlungs- und Steuerungseinrichtung auf. Die Ermittlungs- und Steuerungseinrichtung ist zum, insbesondere zu dem, Ermitteln von, insbesondere den, vektoriellen Abstandsgrößen für mehrere, insbesondere die mehreren, Mastelemente des Verteilermasts in Bezug auf mindestens ein, insbesondere das, Hindernis für die Mastelemente ausgebildet bzw. konfiguriert. Die Ermittlungs- und Steuerungseinrichtung ist zum, insbesondere zu dem, Ermitteln von, insbesondere den, vektoriellen Ausweichbewegungsgrößen für mehrere, insbesondere die mehreren, der Mastkomponenten basierend auf den ermittelten Abstandsgrößen ausgebildet bzw. konfiguriert. Die Ermittlungs- und Steuerungseinrichtung ist zum, insbesondere zu dem, Steuern der Bewegung in Abhängigkeit von den ermittelten Ausweichbewegungsgrößen und einer, insbesondere der, vektoriellen Bedienerbewegungsgröße bestimmend eine, insbesondere die, Spitzenposition ausgebildet bzw. konfiguriert. Die Bedienerbewegungsgröße ist eine, insbesondere die, momentane Soll-Richtung und eine, insbesondere die, momentane Soll-Geschwindigkeit einer, insbesondere der, Soll-Bewegung der Mastspitze. Die Ermittlungs- und Steuerungseinrichtung ist zum, insbesondere zu dem, Steuern der Bewegung mittels Gewichtens der Ausweichbewegungsgrößen und der Bedienerbewegungsgröße ausgebildet bzw. konfiguriert. Die Ermittlungs- und Steuerungseinrichtung ist zum, insbesondere zu dem, Modellieren des Hindernisses, insbesondere eines, insbesondere des, Rests einer, insbesondere der, Bau- und/oder Dickstoffpumpenvorrichtung aufweisend den Verteilermast, mit einer, insbesondere der, Form größer als eine, insbesondere die, reale Form des Hindernisses, insbesondere mittels Glättens und/oder Abflachens von Übergängen der realen Form, ausgebildet bzw. konfiguriert. Insbesondere weist das Modellieren ein, insbesondere das, Einführen von, insbesondere den, Flanken und/oder Rampen auf. Die Ermittlungs- und Steuerungseinrichtung ist zum, insbesondere zu dem, Ermitteln mindestens einer der Abstandsgrößen in Bezug auf das modellierte Hindernis ausgebildet bzw. konfiguriert. Das System kann die gleichen Vorteile ermöglichen wie das/die vorhergehend/e genannte/n bzw. beschriebene/n Verfahren. Insbesondere kann das System, insbesondere die Ermittlungs- und Steuerungseinrichtung, zum, insbesondere automatischen, Ausführen eines/von, insbesondere des/der, vorhergehend genannten Verfahren/s ausgebildet bzw. konfiguriert sein. Zusätzlich oder alternativ kann das System den Verteilermast, insbesondere die Bau- und/oder Dickstoffpumpenvorrichtung, aufweisen. Weiter zusätzlich oder alternativ kann die Ermittlungs- und Steuerungseinrichtung elektrisch, hydraulisch und/oder pneumatisch sein. Insbesondere kann die Ermittlungs- und Steuerungseinrichtung eine Recheneinheit, insbesondere einen Prozessor, und/oder eine Speichereinheit aufweisen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: schematisch ein erfindungsgemäßes System und ein erfindungsgemäßes Verfahren zum Steuern einer Bewegung eines verstellbaren Verteilermasts und ein erfindungsgemäßes Verfahren zum Verteilen von Bau- und/oder Dickstoff mittels einer Bau- und/oder Dickstoffpumpenvorrichtung aufweisend den verstellbaren Verteilermast aufweisend das Verfahren zum Steuern der Bewegung des verstellbaren Verteilermasts,
- Fig. 2: schematisch das System und die Verfahren der Fig. 1,
- Fig. 3: schematisch ein Blockschaltschild des Systems und des Verfahrens der Fig. 1,
- Fig. 4: schematisch eine zeitliche Entwicklung einer Situation mit dem System und dem Verfahren der Fig. 1, und
- Fig. 5: schematisch eine zeitliche Entwicklung einer Situation mit einem nicht-erfindungsgemäßen System und einem nicht-erfindungsgemäßen Verfahren.

### DETAILLIERTE BESCHREIBUNG DER AUSFÜHRUNGSBEISPIELE

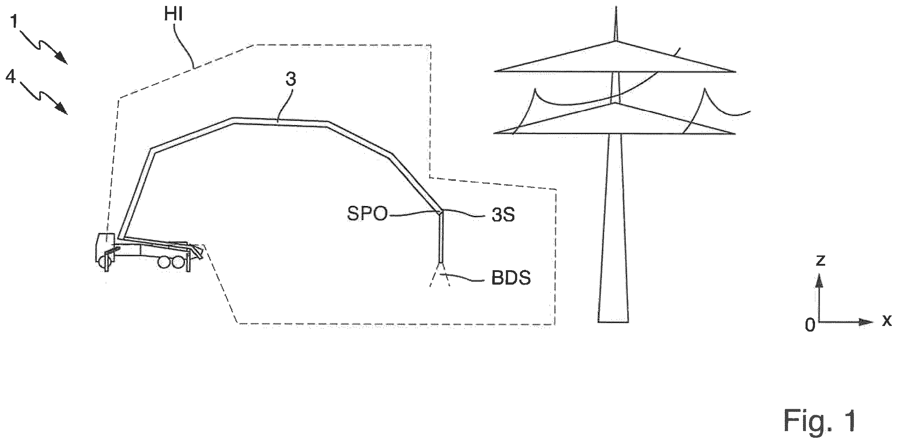

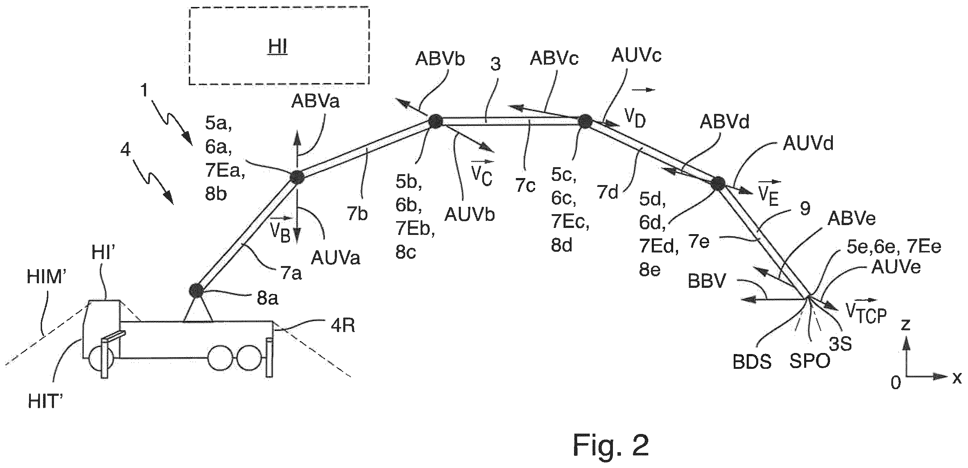

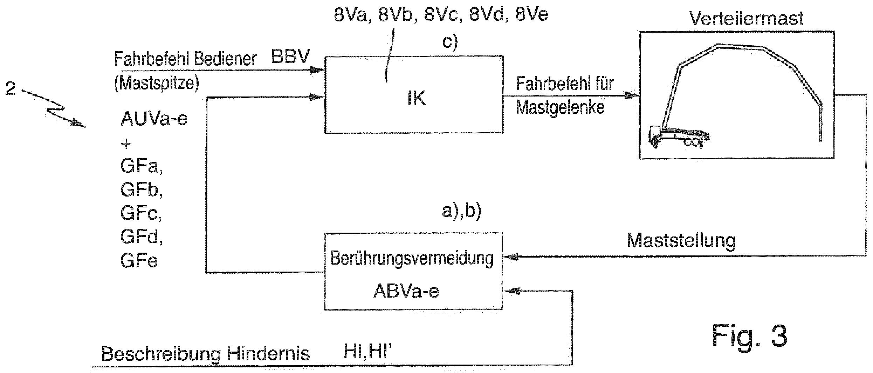

Fig. 1 bis 4 zeigen ein erfindungsgemäßes System 1, insbesondere aufweisend eine Ermittlungs- und Steuerungseinrichtung 2, und ein erfindungsgemäßes Verfahren zum Steuern einer Bewegung eines verstellbaren Verteilermasts 3. Der Verteilermast 3 weist mehrere verstellbare Mastkomponenten 5a, 5b, 5c, 5d, 5e auf. Mindestens eine selbe Spitzenposition SPO einer Mastspitze 3S des Verteilermasts 3 ist durch verschiedene Stellungs-Kombinationen SK, SK' der Mastkomponenten 5a-e erreichbar.

Des Weiteren ist das System 1, insbesondere die Ermittlungs- und Steuerungseinrichtung 2, zum Ermitteln von vektoriellen Abstandsgrößen ABVa, ABVb, ABVc, ABVd, ABVe für mehrere Mastelemente 6a, 6b, 6c, 6d, 6e des Verteilermasts 3 in Bezug auf mindestens ein Hindernis HI, HI' für die Mastelemente 6a-e ausgebildet, insbesondere ermittelt. Außerdem ist das System 1, insbesondere die Ermittlungs- und Steuerungseinrichtung 2, zum Ermitteln von vektoriellen Ausweichbewegungsgrößen AUVa, AUVv, AUVc, AUVd, AUVe für mehrere der Mastkomponenten 5a-e basierend auf den ermittelten Abstandsgrößen ABVa-e ausgebildet, insbesondere ermittelt. Weiter ist das System 1, insbesondere die Ermittlungs- und Steuerungseinrichtung 2, zum Steuern der Bewegung in Abhängigkeit von den ermittelten Ausweichbewegungsgrößen AUVa-e und einer vektoriellen Bedienerbewegungsgröße BBV bestimmend eine Spitzenposition SPO ausgebildet, insbesondere steuert.

Zudem weist das Verfahren die Schritte auf: a) Ermitteln von den vektoriellen Abstandsgrößen ABVa-e für die mehreren Mastelemente 6a-e des Verteilermasts 3 in Bezug auf das Hindernis HI, HI' für die Mastelemente 6a-e, insbesondere mittels des Systems 1, insbesondere der Ermittlungs- und Steuerungseinrichtung 2. b) Ermitteln von den vektoriellen Ausweichbewegungsgrößen AUVa-e für die mehreren der Mastkomponenten 5a-e basierend auf den ermittelten Abstandsgrößen ABVa-e, insbesondere mittels des Systems 1, insbesondere der Ermittlungs- und Steuerungseinrichtung 2. c) Steuern der Bewegung in Abhängigkeit von den ermittelten Ausweichbewegungsgrößen AUVa-e und der vektoriellen Bedienerbewegungsgröße BBV bestimmend die Spitzenposition SPO, insbesondere mittels des Systems 1, insbesondere der Ermittlungs- und Steuerungseinrichtung 2.

In dem gezeigten Ausführungsbeispiel weist das System 1 den Verteilermast 3, insbesondere eine Bau- und/oder Dickstoffpumpenvorrichtung 4 aufweisend den Verteilermast 3, auf.

Im Detail sind die Mastkomponenten 5a-e gleichartig, insbesondere Enden 7Ea, 7Eb, 7Ec, 7Ed, 7Ee von Mastsegmenten 7a, 7b, 7c, 7d, 7e des Verteilermasts 3, insbesondere die Mastspitze 3S und verstellbare Mastgelenke 8b, 8c, 8d, 8e des Verteilermasts 3.

Des Weiteren weist der Verteilermast 3 mehrere verstellbare, insbesondere die mehreren verstellbaren, Mastgelenke 8a, 8b, 8c, 8d, 8e auf. Dieselbe Spitzenposition SPO ist durch verschiedene Gelenkstellungs-Kombinationen GSK, GSK' der Mastgelenke 8a-e erreichbar. Insbesondere weisen die Mastgelenke 8a, 8b, 8c, 8d, 8e verschiedene Verstellbereiche 8Va, 8Vb, 8Vc, 8Vd, 8Ve auf. Der Schritt c) weist auf: Steuern von Bewegungen der Mastgelenke 8a-e in Abhängigkeit von den Ausweichbewegungsgrößen AUVa-e und der Bedienerbewegungsgröße BBV, insbesondere und unter Berücksichtigung der Verstellbereiche 8Va-e, insbesondere mittels des Systems 1, insbesondere der Ermittlungs- und Steuerungseinrichtung 2.

In dem gezeigten Ausführungsbeispiel weist der Verteilermast 3 fünf verstellbare Mastkomponenten 5a-e bzw. fünf Mastsegmente 7a-e bzw. fünf verstellbare Mastgelenke 8a-e auf. In alternativen Ausführungsbeispielen kann der Verteilermast mindestens drei Mastkomponenten bzw. mindestens drei Mastsegmente bzw. mindestens drei Mastgelenke aufweisen.

Zum Hintergrund: Eine Mastkomponente bzw. ein Mastsegment bzw. ein Mastgelenk ermöglicht eine Bewegung der Mastspitze. Zwei Mastkomponenten bzw. zwei Mastsegmente bzw. zwei Mastgelenke ermöglichen eine freie Bewegung der Mastspitze, insbesondere wobei Höhe und Radius, insbesondere in gewissen Grenzen, voneinander unabhängig sind. Mindestens drei Mastkomponenten bzw. mindestens drei Mastsegmente bzw. mindestens drei Mastgelenke ermöglichen eine freie Bewegung der Mastspitze und eine Verstellung bzw. eine Veränderung der Gelenkstellungs-Kombination bzw. eine Einstellung einer Maststellung des Verteilermasts über mindestens einen Freiheitsgrad. In anderen Worten: N Mastkomponenten bzw. N Mastsegmente bzw. N Mastgelenke mit N >= drei ermöglichen eine freie Bewegung der Mastspitze und eine Verstellung bzw. eine Veränderung der Gelenkstellungs-Kombination bzw. eine Einstellung der Maststellung über N-zwei Freiheitsgrade.

Außerdem entspricht, insbesondere gleicht, in dem gezeigten Ausführungsbeispiel eine Mehrzahl der Mastkomponenten 5a-e einer Mehrzahl der Mastelemente 6a-e. In alternativen Ausführungsbeispielen kann die Mehrzahl der Mastelemente mindestens gleich, insbesondere größer als, die Mehrzahl der Mastkomponenten sein.

Weiter führen die vektoriellen Ausweichbewegungsgrößen AUVa-e von dem, insbesondere jeweiligen, Hindernis HI weg. Insbesondere sind die vektoriellen Ausweichbewegungsgrößen AUVa-e den, insbesondere jeweiligen, vektoriellen Abstandsgrößen ABVa-e entgegengesetzt.

Zum Hintergrund: Ermittlung, insbesondere Berechnung, der Abstandsgrößen der Mastelemente von mindestens dem Hindernis. Im Allgemeinen sind dies die Abstandsgrößen von bestimmten Punkten auf dem Verteilermast zu Kanten und/oder Flächen des Hindernisses sowie die Abstandsgrößen bestimmter Kanten und/oder Flächen des Verteilermasts zu Eckpunkten des Hindernisses. Ziel des Ausweichens ist die Aufrechterhaltung (Vermeidung eines Absinkens von Beträgen der Abstandsgrößen auf null) der Abstandsgrößen dieser Punkte von mindestens dem Hindernis. Um die Beträge dieser vektoriellen Abstandsgrößen maximaleffizient zu vergrößern, müssen sich die Punkte, insbesondere Referenzpunkte, entgegengesetzt zu diesen Vektoren bewegen. Die vektoriellen Ausweichbewegungsgrößen, insbesondere Ausweichgeschwindigkeiten, *̅A̅U̅V̅a̅,̅ v̅_̅{̅B̅}̅*̅ bis *A̅U̅V̅e̅,̅ v̅_{TCP}* müssen also entgegengesetzt zu den vektoriellen Abstandsgrößen *A̅B̅V̅a̅,̅ d̅_{B}* bis *A̅B̅V̅e̅,̅ d̅_{TCP}* sein, was auf die Formulierung ${\vec{v}}_{X , A} = {v}_{A , X} ⋅ {\vec{e}}_{d , X}$ mit dem Einheitsvektor entgegengesetzt zu *d̅ₓ* ${\vec{e}}_{d , X} = - \frac{{\vec{d}}_{X}}{{\left‖{\vec{d}}_{X}\right‖}_{2}}$ führt. Der Betrag der Ausweichbewegungsgröße, insbesondere Ausweichgeschwindigkeit, *v_{A,X}* muss positiv sein und wird in Abhängigkeit vom Betrag der vektoriellen Abstandsgröße ∥*d̅_{X}*∥₂ so bestimmt, dass er bei Verringerung des Betrags der vektoriellen Abstandsgröße anwächst. Ein möglicher einfacher Zusammenhang wäre daher ${v}_{A} = \frac{1}{{\left‖{\vec{d}}_{X}\right‖}_{2}}$

Zudem weist der Schritt c) auf: Steuern der Bewegung mittels Gewichtens der Ausweichbewegungsgrößen AUVa-e, insbesondere mittels, insbesondere jeweiliger veränderbarer, Gewichtungsfaktoren GFa, GFb, GFc, GFd, GFe abhängig von, insbesondere jeweiligen, Beträgen der Abstandsgrößen ABVa-e, insbesondere und der Bedienerbewegungsgröße BBV, insbesondere mittels des Systems 1, insbesondere der Ermittlungs- und Steuerungseinrichtung 2.

Zum Hintergrund: Zusätzlich zu den Ausweichbewegungsgrößen, insbesondere den Ausweichgeschwindigkeiten, wird für jede Abstandsgröße bzw. jede Ausweichbewegungsgröße, noch ein Gewicht *GF, w_{A,X}* ermittelt, insbesondere berechnet, das die Dringlichkeit der Ausweichbewegung beschreibt. Die Anforderungen an das Gewicht sind ähnlich wie für den Betrag der Ausweichbewegungsgröße, insbesondere der Ausweichgeschwindigkeit, *v_{A,X}.* Die Trennung in den Betrag der Ausweichbewegungsgröße, insbesondere der Ausweichgeschwindigkeit, einerseits und des Gewichts andererseits ermöglicht, dass auch kleine geforderte Ausweichbewegungsgrößen, insbesondere Ausweichgeschwindigkeiten, mit hoher Dringlichkeit umgesetzt werden können. Insbesondere kann so die Höhe der geforderten Ausweichbewegungsgröße, insbesondere der geforderten Ausweichgeschwindigkeit, begrenzt werden, ohne dass die Berücksichtigung betreffende Bewegung in der nachfolgenden Ermittlung von notwendigen Gelenkgeschwindigkeiten darunter leidet.

Des Weiteren weist der Schritt c) auf: Steuern der Bewegung mittels, insbesondere gewichteter und/oder modularer, inverser Kinematik IK, insbesondere mittels des Systems 1, insbesondere der Ermittlungs- und Steuerungseinrichtung 2. Dabei sind die Ausweichbewegungsgrößen AUVa-e und die Bedienerbewegungsgröße BBV Eingangsgrößen.

Zum Hintergrund: Zur Ermittlung eines Fahrbefehls für die Mastgelenke aus den ermittelten, insbesondere bestimmten Ausweichbewegungsgrößen, insbesondere Ausweichgeschwindigkeiten, und deren Gewichten wird der kinematische Zusammenhang zwischen der zeitlichen Änderung von Gelenkwinkeln *φ*₁ bis *φ_{N}* der Mastgelenke zusammengefasst im Vektor *̅ω̅*̅ $\vec{ω} = \left(\begin{matrix}{ω}_{1} \\ ⋮ \\ {ω}_{N}\end{matrix}\right) = \left(\begin{matrix}{\dot{φ}}_{1} \\ ⋮ \\ {\dot{φ}}_{N}\end{matrix}\right)$ und einer Veränderung der vektoriellen Abstandsgrößen ${\dot{\vec{d}}}_{X}$ verwendet. Für die Abstandsgrößen zwischen den Kanten bzw. Flächen des Hindernisses und den Referenzpunkten auf dem Verteilermast ist diese Veränderung durch die Bewegung der Referenzpunkte auf dem Verteilermast gegeben. Für die Abstandsgrößen zwischen den bestimmten Kanten und/oder Flächen des Verteilermasts und den Eckpunkten des Hindernisses kann die Änderung durch die Bewegung eines oder mehrerer Referenzpunkte auf der betrachteten Kante oder Fläche des Verteilermasts beschrieben werden. Für ein stillstehendes Hindernis ist der relevante Zusammenhang allein durch die Bewegung des jeweiligen Referenzpunktes auf dem Verteilermast gegeben $\dot{\vec{d}} = {\dot{\vec{r}}}_{X} = \frac{\partial {\vec{r}}_{X}}{\partial \vec{φ}} ⋅ \vec{ω} .$

Über diesen Zusammenhang werden Ausweichbewegungsgrößen, insbesondere Ausweichgeschwindigkeiten, *v̅_{A,X}* in den Fahrbefehl in Form von Gelenkgeschwindigkeiten der Mastgelenke umgesetzt. Mit der Forderung ${\dot{\vec{d}}}_{X} = {\vec{v}}_{A , X}$ folgt das Gleichungssystem $\left(\begin{matrix}{\vec{v}}_{A , 1} \\ ⋮ \\ {\vec{v}}_{A , M}\end{matrix}\right) = \left(\begin{matrix}\frac{\partial {\vec{r}}_{1}}{\partial \vec{φ}} \\ ⋮ \\ \frac{\partial {\vec{r}}_{M}}{\partial \vec{φ}}\end{matrix}\right) ⋅ \vec{ω}$

Da neben der Ausweichbewegung der Verteilermast auch die durch einen Bediener vorgegebene Bewegung ausführen soll, ist diese bei der Bestimmung des Fahrbefehls *̅ω̅*̅ ebenfalls zu berücksichtigen. Dieses Kommando erfolgt typischerweise als Vorgabe der Bewegungsgeschwindigkeit der Mastspitze *B̅B̅V̅,̅ v̅_{TCP}* und wird über den kinematischen Zusammenhang ${\vec{v}}_{TCP} = \frac{\partial {\vec{r}}_{TCP}}{\partial \vec{φ}} ⋅ \vec{ω}$ berücksichtigt. Zusätzlich ist eine Berücksichtigung der Verstellbereiche der Mastgelenke sinnvoll. Dazu kann in der Nähe einer Gelenkgrenze ein Fahrbefehl *ω̅_{gef}* in die Mitte des Verstellbereichs verwendet werden. Die kinematische Beziehung dafür ist über die Einheitsmatrix *E_{N}* gegeben ${\vec{ω}}_{gef} = {E}_{N} ⋅ \vec{ω}$

Zur Kombination dieser Zielsetzungen wird ein kombiniertes, im Allgemeinen nicht exakt lösbares, überbestimmtes Gleichungssystem, insbesondere eine, insbesondere kombinierte, Jacobi-Matrix, bzw. die inverse Kinematik IK aufgestellt $\left(\begin{matrix}{\vec{v}}_{A , 1} \\ ⋮ \\ {\vec{v}}_{A , M} \\ {\vec{v}}_{TCP} \\ {\vec{ω}}_{gef}\end{matrix}\right) \approx \left(\begin{matrix}\frac{\partial {\vec{r}}_{1}}{\partial \vec{φ}} \\ ⋮ \\ \frac{\partial {\vec{r}}_{M}}{\partial \vec{φ}} \\ \frac{\partial {\vec{r}}_{TCP}}{\partial \vec{φ}} \\ {E}_{N}\end{matrix}\right) ⋅ \vec{ω}$

Der Fahrbefehl *̅ω̅*̅ wird aus diesem Gleichungssystem als beste Lösung für *̅ω̅*̅ im Sinne der kleinsten Fehlerquadrate ermittelt. Dafür wird die Summe der Quadrate der Fehler in der obigen Gleichung minimiert. Das Kostenfunktional dieser Optimierung ist dabei $K \left(\vec{ω}\right) = {\left(\left(\begin{matrix}{\vec{v}}_{A , 1} \\ ⋮ \\ {\vec{v}}_{A , M} \\ {\vec{v}}_{TCP} \\ {\vec{ω}}_{gef}\end{matrix}\right)-\left(\begin{matrix}\frac{\partial {\vec{r}}_{1}}{\partial \vec{φ}} \\ ⋮ \\ \frac{\partial {\vec{r}}_{M}}{\partial \vec{φ}} \\ \frac{\partial {\vec{r}}_{TCP}}{\partial \vec{φ}} \\ {E}_{N}\end{matrix}\right)⋅\vec{ω}\right)}^{T} ⋅ W ⋅ \left(\left(\begin{matrix}{\vec{v}}_{A , 1} \\ ⋮ \\ {\vec{v}}_{A , M} \\ {\vec{v}}_{TCP} \\ {\vec{ω}}_{gef}\end{matrix}\right)-\left(\begin{matrix}\frac{\partial {\vec{r}}_{1}}{\partial \vec{φ}} \\ ⋮ \\ \frac{\partial {\vec{r}}_{M}}{\partial \vec{φ}} \\ \frac{\partial {\vec{r}}_{TCP}}{\partial \vec{φ}} \\ {E}_{N}\end{matrix}\right)⋅\vec{ω}\right)$

Die Diagonalmatrix W enthält dabei die Gewichte für die Ausweichbewegungsgrößen, insbesondere die Ausweichbewegungen, den Fahrbefehl für die Mastspitze sowie die Fahrbefehle zur Vermeidung der Gelenkgrenzen und sorgt für eine Priorisierung der unterschiedlichen Aufgaben.

Da es sich um einen linearen Zusammenhang handelt, kann dieser direkt über die allgemeine Least-Squares Lösung erfolgen. ${\vec{ω}}_{opt} = {\left({\left(\begin{matrix}\frac{\partial {\vec{r}}_{1}}{\partial \vec{φ}} \\ ⋮ \\ \frac{\partial {\vec{r}}_{M}}{\partial \vec{φ}} \\ \frac{\partial {\vec{r}}_{TCP}}{\partial \vec{φ}} \\ {E}_{N}\end{matrix}\right)}^{T}⋅W⋅\left(\begin{matrix}\frac{\partial {\vec{r}}_{1}}{\partial \vec{φ}} \\ ⋮ \\ \frac{\partial {\vec{r}}_{M}}{\partial \vec{φ}} \\ \frac{\partial {\vec{r}}_{TCP}}{\partial \vec{φ}} \\ {E}_{N}\end{matrix}\right)\right)}^{- 1} ⋅ {\left(\begin{matrix}\frac{\partial {\vec{r}}_{1}}{\partial \vec{φ}} \\ ⋮ \\ \frac{\partial {\vec{r}}_{M}}{\partial \vec{φ}} \\ \frac{\partial {\vec{r}}_{TCP}}{\partial \vec{φ}} \\ {E}_{N}\end{matrix}\right)}^{T} ⋅ W ⋅ \left(\begin{matrix}{\vec{v}}_{A , 1} \\ ⋮ \\ {\vec{v}}_{A , M} \\ {\vec{v}}_{TCP} \\ {\vec{ω}}_{gef}\end{matrix}\right)$

Alternativ, insbesondere und in diesem Fall bzw. dem vorliegenden Fall vorteilhaft, kann die Minimierung des Kostenfunktionals auch iterativ anhand seines Gradienten $\frac{\partial K \left(\vec{ω}\right)}{\partial \vec{ω}} = - 2 {\left(\begin{matrix}\frac{\partial {\vec{r}}_{1}}{\partial \vec{φ}} \\ ⋮ \\ \frac{\partial {\vec{r}}_{M}}{\partial \vec{φ}} \\ \frac{\partial {\vec{r}}_{TCP}}{\partial \vec{φ}} \\ {E}_{N}\end{matrix}\right)}^{T} ⋅ W ⋅ \left(\left(\begin{matrix}{\vec{v}}_{A , 1} \\ ⋮ \\ {\vec{v}}_{A , M} \\ {\vec{v}}_{TCP} \\ {\vec{ω}}_{gef}\end{matrix}\right)-\left(\begin{matrix}\frac{\partial {\vec{r}}_{1}}{\partial \vec{φ}} \\ ⋮ \\ \frac{\partial {\vec{r}}_{M}}{\partial \vec{φ}} \\ \frac{\partial {\vec{r}}_{TCP}}{\partial \vec{φ}} \\ {E}_{N}\end{matrix}\right)⋅\vec{ω}\right)$ erfolgen: ${\vec{ω}}_{opt , i + 1} = {\vec{ω}}_{opt , i} + λ ⋅ {\left.\frac{\partial K \left(\vec{ω}\right)}{\partial \vec{ω}}\right|}_{\vec{ω} = {\vec{ω}}_{opt , i}} ,$ mit dem Schrittweitenparameter *λ* und einem Startwert *̅ω̅*̅_{*opt*,0}, der im einfachsten Fall einfach gleich dem Nullvektor gewählt wird.

Zur Berücksichtigung mehrerer Hindernisse werden die Ausweichbewegungsgrößen, insbesondere die Ausweichgeschwindigkeiten, für einen Referenzpunkt auf dem Verteilermast gewichtet gemittelt. Das Gesamtgewicht für diese resultierende Ausweichbewegungsgröße, insbesondere Ausweichgeschwindigkeit, wird aus den einzelnen Gewichten z.B. als Summe oder Maximalwert bestimmt.

Die ermittelten, insbesondere berechneten, Ausweichbewegungsgrößen, insbesondere Ausweichgeschwindigkeiten, führen dazu, dass sich die Mastsegmente und/oder die Mastgelenke von mindestens dem Hindernis wegbewegen und sich damit eine Maststellung bzw. -pose einstellt, die sich bestmöglichst um mindestens das Hindernis bewegt.

Zusätzlich oder alternativ sorgt die veränderbare bzw. adaptive Gewichtung für eine sanfte Überblendung von Fahrbefehl und Ausweichbewegung, so dass der Abstand zwischen Verteilermast und mindestens dem Hindernis automatisch vergrößert wird, falls dies mit dem Fahrbefehl des Bedieners vereinbar ist.

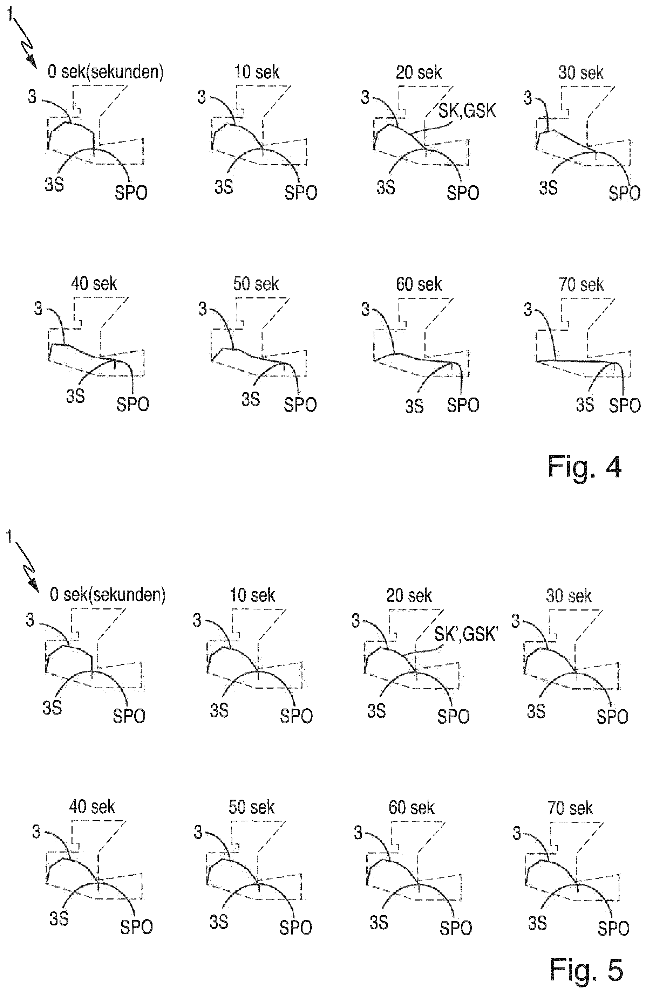

Dies stellt einen Vorteil gegenüber einem nicht-erfindungsgemäßen System und einem nicht-erfindungsgemäßen dar, da das erfindungsgemäße System bei einer drohenden Berührung zusätzlich zum Fahrbefehl aktiv Ausweichbewegungen einleitet, wie in Fig. 4 gezeigt, und nicht nur den Verteilermast zum Stehen bringt, wie in Fig. 5 gezeigt.

Außerdem weist das Verfahren auf: Speichern der gesteuerten Bewegung des Verteilermasts 3, insbesondere mittels des Systems 1, insbesondere der Ermittlungs- und Steuerungseinrichtung 2. Das Verfahren weist den Schritt auf: falls die Ausweichbewegungsgrößen AUVa-e und die Bedienerbewegungsgröße BBV nicht miteinander vereinbar sind, insbesondere die Ausweichbewegungsgrößen AUVa-e die Bedienerbewegungsgröße BBV überwiegen, rückwärtslaufendes Ausführen der gespeicherten Bewegung, insbesondere mittels des Systems 1, insbesondere der Ermittlungs- und Steuerungseinrichtung 2.

Weiter weist das Verfahren den Schritt auf: Modellieren des Hindernisses HI', insbesondere eines Rests 4R der Bau- und/oder Dickstoffpumpenvorrichtung 4 aufweisend den Verteilermast 3, mit einer Form HIM' größer als eine reale Form HIT' des Hindernisses HI', insbesondere mittels Glättens und/oder Abflachens von Übergängen der realen Form HIT', insbesondere mittels des Systems 1, insbesondere der Ermittlungs- und Steuerungseinrichtung 2. Der Schritt a) weist auf: Ermitteln mindestens einer der Abstandsgrößen ABVa-e in Bezug auf das modellierte Hindernis HI'.

Zudem zeigen Fig. 1 bis 4 das erfindungsgemäße Verfahren zum Verteilen von Bau- und/oder Dickstoff BDS mittels der Bau- und/oder Dickstoffpumpenvorrichtung. Die Bau- und/oder Dickstoffpumpenvorrichtung 4 weist den verstellbaren Verteilermast 3 auf. Der Verteilermast 3 weist eine Förderleitung 9 zum Fördern von Bau- und/oder Dickstoff BDS auf. Das Verfahren weist das Verfahren zum Steuern der Bewegung des Verteilermasts 3 wie vorhergehend genannt auf. Das Verfahren weist den Schritt auf: Fördern von Bau- und/oder Dickstoff BDS während der Bewegung.

Wie die gezeigten und oben erläuterten Ausführungsbeispiele deutlich machen, stellt die Erfindung ein vorteilhaftes Verfahren und ein vorteilhaftes System, insbesondere jeweils, zum Steuern einer Bewegung eines verstellbaren Verteilermasts, das jeweils verbesserte Eigenschaften aufweist, und ein vorteilhaftes Verfahren zum Verteilen von Bau- und/oder Dickstoff mittels einer Bau- und/oder Dickstoffpumpenvorrichtung aufweisend einen verstellbaren Verteilermast aufweisend ein solches Verfahren zum Steuern einer Bewegung eines verstellbaren Verteilermasts bereit.

## Patentansprüche

1. Verfahren zum Steuern einer Bewegung eines verstellbaren Verteilermasts (3), wobei der Verteilermast (3) mehrere verstellbare Mastkomponenten (5a, 5b, 5c, 5d, 5e) aufweist, wobei mindestens eine selbe Spitzenposition (SPO) einer Mastspitze (3S) des Verteilermasts (3) durch verschiedene Stellungs-Kombinationen (SK, SK') der Mastkomponenten (5a-e) erreichbar ist, wobei das Verfahren die Schritte aufweist:
a) Ermitteln von vektoriellen Abstandsgrößen (ABVa, ABVb, ABVc, ABVd, ABVe) für mehrere Mastelemente (6a, 6b, 6c, 6d, 6e) des Verteilermasts (3) in Bezug auf mindestens ein Hindernis (HI, HI') für die Mastelemente (6a-e),
b) Ermitteln von vektoriellen Ausweichbewegungsgrößen (AUVa, AUVb, AUVc, AUVd, AUVe) für mehrere der Mastkomponenten (5a-e) basierend auf den ermittelten Abstandsgrößen (ABVa-e), und
c) Steuern der Bewegung in Abhängigkeit von den ermittelten Ausweichbewegungsgrößen (AUVa-e) und einer vektoriellen Bedienerbewegungsgröße (BBV) bestimmend eine Spitzenposition (SPO),
wobei die Bedienerbewegungsgröße (BBV) eine momentane Soll-Richtung und eine momentane Soll-Geschwindigkeit einer Soll-Bewegung der Mastspitze (3S) ist, und
- wobei das Verfahren den Schritt aufweist: Modellieren des Hindernisses (HI'), insbesondere eines Rests (4R) einer Bau- und/oder Dickstoffpumpenvorrichtung (4) aufweisend den Verteilermast (3), mit einer Form (HIM') größer als eine reale Form (HIT') des Hindernisses (HI'), insbesondere mittels Glättens und/oder Abflachens von Übergängen der realen Form (HIT'), insbesondere wobei das Modellieren ein Einführen von Flanken und/oder Rampen aufweist, und wobei der Schritt a) aufweist: Ermitteln mindestens einer der Abstandsgrößen (ABVa-e) in Bezug auf das modellierte Hindernis (HI'), **dadurch gekennzeichnet, dass** der Schritt c) aufweist: Steuern der Bewegung mittels Gewichtens der Ausweichbewegungsgrößen (AUVa-e) und der Bedienerbewegungsgröße (BBV).

2. Verfahren nach Anspruch 1,
- wobei die Mastkomponenten (5a-e) gleichartig sind, insbesondere Enden (7Ea, 7Eb, 7Ec, 7Ed, 7Ee) von Mastsegmenten (7a, 7b, 7c, 7d, 7e) des Verteilermasts (3), insbesondere die Mastspitze (3S) und verstellbare Mastgelenke (8b, 8c, 8d, 8e) des Verteilermasts (3).

3. Verfahren nach einem der vorhergehenden Ansprüche,
- wobei die vektoriellen Ausweichbewegungsgrößen (AUVa-e) von dem, insbesondere jeweiligen, Hindernis (HI) wegführen, insbesondere den, insbesondere jeweiligen, vektoriellen Abstandsgrößen (ABVa-e) entgegengesetzt sind.

4. Verfahren nach einem der vorhergehenden Ansprüche,
- wobei der Schritt c) aufweist: Steuern der Bewegung mittels Gewichtens der Ausweichbewegungsgrößen (AUVa-e) mittels, insbesondere jeweiliger veränderbarer, Gewichtungsfaktoren (GFa, GFb, GFc, GFd, GFe) abhängig von, insbesondere jeweiligen, Beträgen der Abstandsgrößen (ABVa-e) und der Bedienerbewegungsgröße (BBV).

5. Verfahren nach einem der vorhergehenden Ansprüche, insbesondere Anspruch 4,
- wobei das Verfahren aufweist: Speichern der gesteuerten Bewegung des Verteilermasts (3), und
- wobei das Verfahren den Schritt aufweist: falls die Ausweichbewegungsgrößen (AUVa-e) und die Bedienerbewegungsgröße (BBV) nicht miteinander vereinbar sind, insbesondere die Ausweichbewegungsgrößen (AUVa-e) die Bedienerbewegungsgröße (BBV) überwiegen, rückwärtslaufendes Ausführen der gespeicherten Bewegung.

6. Verfahren nach einem der vorhergehenden Ansprüche,
- wobei der Verteilermast (3) mehrere verstellbare Mastgelenke (8a, 8b, 8c, 8d, 8e) aufweist, wobei dieselbe Spitzenposition (SPO) durch verschiedene Gelenkstellungs-Kombinationen (GSK, GSK') der Mastgelenke (8a-e) erreichbar ist, insbesondere wobei die Mastgelenke (8a, 8b, 8c, 8d, 8e) verschiedene Verstellbereiche (8Va, 8Vb, 8Vc, 8Vd, 8Ve) aufweisen,
- wobei der Schritt c) aufweist: Steuern von Bewegungen der Mastgelenke (8a-e) in Abhängigkeit von den Ausweichbewegungsgrößen (AUVa-e) und der Bedienerbewegungsgröße (BBV), insbesondere und unter Berücksichtigung der Verstellbereiche (8Va-e).

7. Verfahren nach einem der vorhergehenden Ansprüche, insbesondere Anspruch 4 und/oder Anspruch 6,
- wobei der Schritt c) aufweist: Steuern der Bewegung mittels, insbesondere gewichteter und/oder modularer, inverser Kinematik (IK), wobei die Ausweichbewegungsgrößen (AUVa-e) und die Bedienerbewegungsgröße (BBV) Eingangsgrößen sind.

8. Verfahren zum Verteilen von Bau- und/oder Dickstoff (BDS) mittels einer Bau- und/oder Dickstoffpumpenvorrichtung (4), wobei die Bau- und/oder Dickstoffpumpenvorrichtung (4) einen verstellbaren Verteilermast (3) aufweist, wobei der Verteilermast (3) eine Förderleitung (9) zum Fördern von Bau- und/oder Dickstoff (BDS) aufweist,
- wobei das Verfahren ein Verfahren zum Steuern einer Bewegung des Verteilermasts (3) nach einem der vorhergehenden Ansprüche aufweist, und
- wobei das Verfahren den Schritt aufweist: Fördern von Bau- und/oder Dickstoff (BDS) während der Bewegung.

9. System (1) zum Steuern einer Bewegung eines verstellbaren Verteilermasts (3), wobei der Verteilermast (3) mehrere verstellbare Mastkomponenten (5a, 5b, 5c, 5d, 5e) aufweist, wobei mindestens eine selbe Spitzenposition (SPO) einer Mastspitze (3S) des Verteilermasts (3) durch verschiedene Stellungs-Kombinationen (SK, SK') der Mastkomponenten (5a-e) erreichbar ist, insbesondere zum Ausführen eines Verfahrens nach einem der vorhergehenden Ansprüche, wobei das System (1) aufweist:
- eine Ermittlungs- und Steuerungseinrichtung (2),
- wobei die Ermittlungs- und Steuerungseinrichtung (2) zum Ermitteln von vektoriellen Abstandsgrößen (ABVa, ABVb, ABVc, ABVd, ABVe) für mehrere Mastelemente (6a, 6b, 6c, 6d, 6e) des Verteilermasts (3) in Bezug auf mindestens ein Hindernis (HI, HI') für die Mastelemente (6a-e) ausgebildet ist,
- wobei die Ermittlungs- und Steuerungseinrichtung (2) zum Ermitteln von vektoriellen Ausweichbewegungsgrößen (AUVa, AUVb, AUVc, AUVd, AUVe) für mehrere der Mastkomponenten (5a-e) basierend auf den ermittelten Abstandsgrößen (ABVa-e) ausgebildet ist, und
- wobei die Ermittlungs- und Steuerungseinrichtung (2) zum Steuern der Bewegung in Abhängigkeit von den ermittelten Ausweichbewegungsgrößen (AUVa-e) und einer vektoriellen Bedienerbewegungsgröße (BBV) bestimmend eine Spitzenposition (SPO) ausgebildet ist,
wobei die Bedienerbewegungsgröße (BBV) eine momentane Soll-Richtung und eine momentane Soll-Geschwindigkeit einer Soll-Bewegung der Mastspitze (3S) ist, und
- wobei die Ermittlungs- und Steuerungseinrichtung (2) zum Modellieren des Hindernisses (HI'), insbesondere eines Rests (4R) einer Bau- und/oder Dickstoffpumpenvorrichtung (4) aufweisend den Verteilermast (3), mit einer Form (HIM') größer als eine reale Form (HIT') des Hindernisses (HI'), insbesondere mittels Glättens und/oder Abflachens von Übergängen der realen Form (HIT'), ausgebildet ist, insbesondere wobei das Modellieren ein Einführen von Flanken und/oder Rampen aufweist, und wobei die Ermittlungs- und Steuerungseinrichtung (2) zum Ermitteln mindestens einer der Abstandsgrößen (ABVa-e) in Bezug auf das modellierte Hindernis (HI') ausgebildet ist, **dadurch gekennzeichnet, dass** die Ermittlungs- und Steuerungseinrichtung (2) zum Steuern der Bewegung mittels Gewichtens der Ausweichbewegungsgrößen (AUVa-e) und der Bedienerbewegungsgröße (BBV) ausgebildet ist.

## Claims

1. A method for controlling a movement of an adjustable distributor boom (3), wherein the distributor boom (3) has a plurality of adjustable boom components (5a, 5b, 5c, 5d, 5e), wherein at least one same tip position (SPO) of a boom tip (3S) of the distributor boom (3) is achievable by different position combinations (SK, SK') of the boom components (5a-e), wherein the method comprises the following steps:
a) identifying vectorial distance variables (ABVa, ABVb, ABVc, ABVd, ABVe) for a plurality of boom elements (6a, 6b, 6c, 6d, 6e) of the distributor boom (3) in relation to at least one obstacle (HI, HI') for the boom elements (6a-e);
b) identifying vectorial evasive movement variables (AUVa, AUVb, AUVc, AUVd, AUVe) for a plurality of the boom components (5a-e) based on the identified distance variables (ABVa-e); and
c) controlling the movement as a function of the identified evasive movement variables (AUVa-e) and a vectorial operator movement variable (BBV) determining a tip position (SPO),
- wherein the operator movement variable (BBV) is a momentary target direction and a momentary target speed of a target movement of the boom tip (3S);
- wherein the method comprises the step: modeling the obstacle (HI'), in particular of a remaining part (4R) of a construction material and/or thick matter pumping device (4) having the distributor boom (3), with a shape (HIM') larger than a real shape (HIT') of the obstacle (HI'), in particular by smoothing and/or flattening transitions of the real shape (HIT'), in particular wherein the modeling comprises an introduction of flanks and/or ramps; and wherein step a) comprises: identifying at least one of the distance variables (ABVa-e) in relation to the modeled obstacle (HI');
- **characterized in that** step c) comprises: controlling the movement by means of weighting the evasive movement variables (AUVa-e) and the operator movement variable (BBV).

2. The method as claimed in claim 1,
- wherein the boom components (5a-e) are of identical type, in particular ends (7Ea, 7Eb, 7Ec, 7Ed, 7Ee) of boom segments (7a, 7b, 7c, 7d, 7e) of the distributor boom (3), in particular the boom tip (3S) and adjustable boom joints (8b, 8c, 8d, 8e) of the distributor boom (3).

3. The method as claimed in one of the preceding claims,
- wherein the vectorial evasive movement variables (AUVa-e) lead away from the, in particular respective, obstacle (HI), and in particular are counter to the, in particular respective, vectorial distance variables (ABVa-e).

4. The method as claimed in one of the preceding claims,
- wherein step c) comprises: controlling the movement by means of weighting the evasive movement variables (AUVa-e) by means of, in particular respective variable, weighting factors (GFa, GFb, GFc, GFd, GFe) depending on, in particular respective, values of the distance variables (ABVa-e) and the operator movement variable (BBV).

5. The method as claimed in one of the preceding claims, in particular claim 4,
- wherein the method comprises: memorizing the controlled movement of the distributor boom (3); and
- wherein the method comprises the step: should the evasive movement variables (AUVa-e) and the operator movement variable (BBV) not be mutually compatible, in particular the evasive movement variables (AUVa-e) outweigh the operator movement variable (BBV), carrying out the memorized movement in reverse.

6. The method as claimed in one of the preceding claims,
- wherein the distributor boom (3) has a plurality of adjustable boom joints (8a, 8b, 8c, 8d, 8e), wherein the same tip position (SPO) is achievable by different joint position combinations (GSK, GSK') of the boom joints (8a-e), in particular wherein the boom joints (8a, 8b, 8c, 8d, 8e) have different adjustment ranges (8Va, 8Vb, 8Vc, 8Vd, 8Ve) ;
- wherein step c) comprises: controlling movements of the boom joints (8a-e) as a function of the evasive movement variables (AUVa-e) and the operator movement variable (BBV), in particular and while taking into account the adjustment ranges (8Va-e).

7. The method as claimed in one of the preceding claims, in particular claim 4 and/or claim 6,
- wherein step c) comprises: controlling the movement by means of, in particular weighted and/or modular, inverse kinematics (IK), wherein the evasive movement variables (AUVa-e) and the operator movement variable (BBV) are input variables.

8. A method for distributing construction material and/or thick matter (BDS) by means of a construction material and/or thick matter pumping device (4), wherein the construction material and/or thick matter pumping device (4) has an adjustable distributor boom (3), wherein the distributor boom (3) has a conveying line (9) for conveying construction material and/or thick matter (BDS);
- wherein the method comprises a method for controlling a movement of the distributor boom (3) as claimed in one of the preceding claims; and
- wherein the method comprises the step: conveying construction material and/or thick matter (BDS) during the movement.

9. A system (1) for controlling a movement of an adjustable distributor boom (3), wherein the distributor boom (3) has a plurality of adjustable boom components (5a, 5b, 5c, 5d, 5e), wherein at least one same tip position (SPO) of a boom tip (3S) of the distributor boom (3) is achievable by different position combinations (SK, SK') of the boom components (5a-e), in particular for carrying out a method as claimed in one of the preceding claims, wherein the system (1) has:
- an identification and control installation (2);
- wherein the identification and control installation (2) is configured to identify vectorial distance variables (ABVa, ABVb, ABVc, ABVd, ABVe) for a plurality of boom elements (6a, 6b, 6c, 6d, 6e) of the distributor boom (3) in relation to at least one obstacle (HI, HI') for the boom elements (6a-e);
- wherein the identification and control installation (2) is configured to identify vectorial evasive movement variables (AUVa, AUVb, AUVc, AUVd, AUVe) for a plurality of the boom components (5a-e) based on the identified distance variables (ABVa-e); and
- wherein the identification and control installation (2) is configured to control the movement as a function of the identified evasive movement variables (AUVa-e) and a vectorial operator movement variable (BBV) determining a tip position (SPO),
- wherein the operator movement variable (BBV) is a momentary target direction and a momentary target speed of a target movement of the boom tip (3S);
- wherein the identification and control installation (2) is configured to model the obstacle (HI'), in particular of a remaining part (4R) of a construction material and/or thick matter pumping device (4) having the distributor boom (3), with a shape (HIM') larger than a real shape (HIT') of the obstacle (HI'), in particular by smoothing and/or flattening transitions of the real shape (HIT'), in particular wherein the modeling comprises an introduction of flanks and/or ramps; and wherein the identification and control installation (2) is configured to identify at least one of the distance variables (ABVa-e) in relation to the modeled obstacle (HI');
- **characterized in that** the identification and control installation (2) is configured to control the movement by means of weighting the evasive movement variables (AUVa-e) and the operator movement variable (BBV).

## Revendications

1. Procédé de commande d'un mouvement d'un mât de distribution (3) ajustable, le mât de distribution (3) comportant plusieurs composants de mât (5a, 5b, 5c, 5d, 5e) ajustables, au moins une même position d'extrémité (SPO) d'une pointe de mât (3S) du mât de distribution (3) pouvant être obtenue par différentes combinaisons de positions (SK, SK') des composants de mât (5a-e), le procédé comportant les étapes :
a) détermination de grandeurs de distance vectorielles (ABVa, ABVb, ABVc, ABVd, ABVe) pour plusieurs éléments de mât (6a, 6b, 6c, 6d, 6e) du mât de distribution (3) par rapport à au moins un obstacle (HI, HI') pour les éléments de mât (6a-e),
b) détermination de grandeurs vectorielles de mouvement d'évitement (AUVa, AUVb, AUVc, AUVd, AUVe) pour plusieurs des composants de mât (5a-e) sur la base des grandeurs de distance déterminées (ABVa-e), et
c) commande du mouvement en fonction des grandeurs de mouvement d'évitement déterminées (AUVa-e) et d'une grandeur de mouvement vectorielle de l'opérateur (BBV), définissant une position de pointe (SPO),
la grandeur de mouvement de l'opérateur (BBV) étant une direction théorique actuelle et une vitesse théorique actuelle d'un mouvement théorique de la pointe de mât (3S),
et
- le procédé comportant l'étape : modélisation de l'obstacle (HI'), en particulier d'un reste (4R) d'un dispositif de pompage de matériaux de construction et/ou de matières épaisses (4) comportant le mât de distribution (3), avec une forme (HIM') plus grande qu'une forme réelle (HIT') de l'obstacle (HI'), en particulier par lissage et/ou aplatissement de transitions de la forme réelle (HIT'), en particulier la modélisation comportant une introduction de flancs et/ou de rampes, et l'étape a) comportant : détermination d'au moins une des grandeurs de distance (ABVa-e) par rapport à l'obstacle modélisé (HI'), **caractérisé en ce que** l'étape c) comporte : commande du mouvement en pondérant les grandeurs de mouvement d'évitement (AUVa-e) et la grandeur de mouvement de l'opérateur (BBV).

2. Procédé selon la revendication 1,
- les composants de mât (5a-e) étant identiques, en particulier des extrémités (7Ea, 7Eb, 7Ec, 7Ed, 7Ee) de segments de mât (7a, 7b, 7c, 7d, 7e) du mât de distribution (3), en particulier la pointe de mât (3S) et des articulations de mât (8b, 8c, 8d, 8e) ajustables du mât de distribution (3).

3. Procédé selon l'une des revendications précédentes,
- les grandeurs vectorielles de mouvement d'évitement (AUVa-e) s'éloignant de l'obstacle (HI), en particulier respectif, étant en particulier opposées aux grandeurs de distance vectorielles (ABVa-e), en particulier respectives.

4. Procédé selon l'une des revendications précédentes,
- l'étape c) comportant : commande du mouvement en pondérant les grandeurs de mouvement d'évitement (AUVa-e) au moyen de facteurs de pondération (GFa, GFb, GFc, GFd, GFe), en particulier respectifs modifiables, en fonction de valeurs, en particulier respectives, des grandeurs de distance (ABVa-e) et la grandeur de mouvement de l'opérateur (BBV).

5. Procédé selon l'une des revendications précédentes, en particulier selon la revendication 4,
- le procédé comportant : mémorisation du mouvement commandé du mât de distribution (3), et
- le procédé comportant l'étape : si les grandeurs de mouvement d'évitement (AUVa-e) et la grandeur de mouvement de l'opérateur (BBV) ne sont pas compatibles l'une avec l'autre, en particulier les grandeurs de mouvement d'évitement (AUVa-e) l'emportent sur la grandeur de mouvement de l'opérateur (BBV), l'exécution inverse du mouvement mémorisé.

6. Procédé selon l'une des revendications précédentes,
- le mât de distribution (3) comportant plusieurs articulations de mât (8a, 8b, 8c, 8d, 8e) ajustables, la même position de pointe (SPO) pouvant être atteinte par différentes combinaisons de positions d'articulation (GSK, GSK') des articulations de mât (8a-e), en particulier les articulations de mât (8a, 8b, 8c, 8d, 8e) comportant des plages d'ajustement différentes (8Va, 8Vb, 8Vc, 8Vd, 8Ve),
- l'étape c) comportant : commande de mouvements des articulations de mât (8a-e) en fonction des grandeurs de mouvement d'évitement (AUVa-e) et de la grandeur de mouvement de l'opérateur (BBV), en particulier en tenant compte des plages d'ajustement (8Va-e).

7. Procédé selon l'une des revendications précédentes, en particulier selon la revendication 4 et/ou la revendication 6,
- l'étape c) comportant : commande du mouvement au moyen d'une cinématique inverse (IK), en particulier pondérée et/ou modulaire, les grandeurs de mouvement d'évitement (AUVa-e) et la grandeur de mouvement de l'opérateur (BBV) étant des grandeurs d'entrée.

8. Procédé de distribution de matériaux de construction et/ou de matières épaisses (BDS) au moyen d'un dispositif de pompage de matériaux de construction et/ou de matières épaisses (4), le dispositif de pompage de matériaux de construction et/ou de matières épaisses (4) comportant un mât de distribution (3) ajustable, le mât de distribution (3) comportant une conduite de transport (9) pour le transport de matériaux de construction et/ou de matières épaisses (BDS),
- le procédé comportant un procédé destiné à commander un mouvement du mât de distribution (3) selon l'une des revendications précédentes, et
- le procédé comportant l'étape : transport de matériaux de construction et/ou de matières épaisses (BDS) pendant le mouvement.

9. Système (1) de commande d'un mouvement d'un mât de distribution (3) ajustable, le mât de distribution (3) comportant plusieurs composants de mât (5a, 5b, 5c, 5d, 5e) ajustables, au moins une même position de pointe (SPO) d'une pointe de mât (3S) du mât de distribution (3) pouvant être atteinte par différentes combinaisons de positions (SK, SK') des composants de mât (5a-e), en particulier pour l'exécution d'un procédé selon l'une des revendications précédentes, le système (1) comportant :
- un système de détermination et de commande (2),
- le système de détermination et de commande (2) étant formé pour déterminer des grandeurs de distance vectorielles (ABVa, ABVb, ABVc, ABVd, ABVe) pour plusieurs éléments de mât (6a, 6b, 6c, 6d, 6e) du mât de distribution (3) par rapport à au moins un obstacle (HI, HI') pour les éléments de mât (6a-e),
- le système de détermination et de commande (2) étant formé pour déterminer des grandeurs vectorielles de mouvement d'évitement (AUVa, AUVb, AUVc, AUVd, AUVe) pour plusieurs des composants de mât (5a-e) sur la base des grandeurs de distance déterminées (ABVa-e), et
- le système de détermination et de commande (2) étant formé pour commander le mouvement en fonction des grandeurs de mouvement d'évitement (AUVa-e) déterminées et d'une grandeur de mouvement vectorielle de l'opérateur (BBV) en définissant une position de pointe (SPO),
la grandeur de mouvement de l'opérateur (BBV) étant une direction théorique courante et une vitesse théorique courante d'un mouvement théorique de la pointe de mât (3S), et
- le système de détermination et de commande (2) étant formé pour la modélisation de l'obstacle (HI'), en particulier d'un reste (4R) d'un dispositif de pompage de matériaux de construction et/ou de matières épaisses (4) comportant le mât de distribution (3), avec une forme (HIM') plus grande qu'une forme réelle (HIT') de l'obstacle (HI'), en particulier par lissage et/ou aplatissement de transitions de la forme réelle (HIT'), la modélisation comportant en particulier une introduction de flancs et/ou de rampes, et le système de détermination et de commande (2) étant formé pour déterminer au moins une des grandeurs de distance (ABVa-e) par rapport à l'obstacle modélisé (HI'), **caractérisé en ce que** le système de détermination et de commande (2) est formé pour commander le mouvement par pondération des grandeurs de mouvement d'évitement (AUVa-e) et de la grandeur de mouvement de l'opérateur (BBV).
